# EUROPEAN PATENT SPECIFICATION

(11) **EP 3 091 202 B1**
(45) Date of publication and mention of the grant of the patent: **03.04.2019**
(21) Application number: 15166803.5
(22) Date of filing: 07.05.2015
(51) Int. Cl.: F01D 25/30, F01D 21/00, F02C 7/057

(54) **METHOD FOR COUNTERACTING DRAFT THROUGH AN ARRANGEMENT INCLUDING A GAS TURBINE DURING A STOP**
VERFAHREN ZUM ENTGEGENWIRKEN GEGEN ZUG DURCH EINE ANORDNUNG MIT EINER GASTURBINE WÄHREND EINES STOPPS
PROCÉDÉ POUR CONTRER UN TIRAGE GRÂCE À UN AGENCEMENT COMPRENANT UNE TURBINE À GAZ PENDANT UN ARRÊT

(43) Date of publication of application: 09.11.2016
(73) Proprietor: Ansaldo Energia IP UK Limited, London W1G 9DQ (GB)
(72) Inventor: Mohr, Wolfgang Franz Dietrich, 8166 Niederweningen (CH); Pereti, Michele, 5400 Baden (CH)
(74) Representative: Bernotti, Andrea

(56) References cited:
- EP-A2- 2 213 843
- CN-A- 103 573 413
- JP-A- 2001 329 804

## Description

### TECHNICAL FIELD

The present invention relates to a method for counteracting draft through an arrangement including a gas turbine during a stop. The gas turbine is preferably part of a power plant for electric power generation. In addition, preferably the arrangement also comprises a heat recovery steam generator, i.e. a steam generator in which heat from the exhaust gas discharged from the gas turbine is recovered to generate steam that is e.g. used in a steam cycle. Naturally the gas turbine and possibly heat recovery steam generator can also be used in applications different from power plants, e.g. mechanical-drive units (e.g. for application in the oil&gas field to move compressors/pumps); other applications are further possible.

### BACKGROUND

Power plants with gas turbines and possibly heat recovery steam generators supplying a steam cycle are connected to electric grids that are also connected to power plants using renewable energy sources. For this reasons the power plants with gas turbines and possibly heat recovery steam generators must allow a flexible operation, with possibility to stop the gas turbines and then when required restart the gas turbines to provide electric power to the electric grid.

When the gas turbines e.g. with a heat recovery steam generator are stopped, due to natural convection caused by the hot gas contained in the gas turbine and/or heat recovery steam generator and/or in the flue gas stack and/or due to the pressure differences caused by the wind speed and/or direction, cold air is constantly dragged through the gas turbine and the heat recovery steam generator.

This cold air causes cooling of the gas turbine and heat recovery steam generator.

Cooling of the gas turbine and heat recovery steam generator prevents a quick restart.

In fact, when the gas turbine and heat recovery steam generator have to be restarted, their loading has to comply with the constrains imposed by the gas turbine and heat recovery steam generator temperature.

In addition, the lower temperature can cause the pressure of the steam/water within the heat recovery steam generator to drop below the atmospheric pressure; this can result in deformation of the walls of some components of the water/steam path of the heat recovery steam generator. In order to prevent such deformation it could be needed introduction of ambient air into the steam/water of the heat recovery steam generator, with the consequent need of purging before the gas turbine and heat recovery steam generator are restarted. In case the gas turbines and heat recovery steam generators are stopped for long time (e.g. months in case of "conservation"), air could circulate through the gas turbine and heat recovery steam generator because of different pressure (e.g. caused by wind intensity and/or direction) between the inlet of the gas turbine filter and the stack. In case air contains humidity, corrosion can occur.

Therefore, in order to allow restarting of the gas turbine and heat recovery steam generator as quickly as possible and/or to prevent corrosion, the draft through the gas turbine and heat recovery steam generator must be counteracted.

Traditionally, in order to counteract the draft, the variable inlet guide vanes of the gas turbine compressor (i.e. the vanes provided at the inlet of the compressor to control the air flow through the gas turbine) are closed and/or shutters (provided e.g. in the filter upstream of the compressor) and/or dampers (provided e.g. at the stack) are closed.

By way of these measures the natural draft through the gas turbine and possibly the heat recovery steam generator is reduced, but because of leakages there can still be a substantial amount of natural draft.

Other solutions relating to the control of the temperature of the gas turbine are disclosed in documents CN103573413 and JP2001329804. However the solution disclosed in document CN103573413 is focused on an apparatus preventing icing at the inlet of the compressor and cannot solve the above mentioned problem of natural draft, while the solution disclosed in document JP2001329804 is not sufficiently efficient.

### SUMMARY

An aspect of the invention includes providing a method according to claim 1 and an arrangement according to claim 5 that permit to efficiently counteract the natural draft through the gas turbine.

Preferably, the method and arrangement permit to counteract natural draft through both the gas turbine and the heat recovery steam generator of the arrangement, when the gas turbine is stopped.

These and further aspects are attained by providing a method and an arrangement in accordance with the accompanying claims.

### BRIEF DESCRIPTION OF THE DRAWINGS

Further characteristics and advantages will be more apparent from the description of a preferred but non-exclusive embodiment of the method and arrangement, illustrated by way of non-limiting example in the accompanying drawings, in which:
Figures 1 through 3 show different examples of the arrangement;
Figure 4 shows the internal pressure within the arrangement with reference to an embodiment of the arrangement;
Figures 5 through 9 show the internal pressure within the arrangement with reference to different schematic embodiments of the arrangement;
Figures 10 and 11 show the draft interceptors such as stack damper in different configurations.

### DETAILED DESCRIPTION OF EXEMPLARY EMBODIMENTS

In the following the arrangement is described first.

The arrangement 1 includes a gas turbine 2 and possibly (but this is not mandatory) a heat recovery steam generator 3.

The gas turbine 2 comprises a compressor 5, a combustion chamber 6 and a turbine 7; the turbine can be connected to an electric generator 8 that is in turn electrically connected to an electric grid; in other applications the gas turbine can be connected to other machines according to the need and design.

Upstream of the compressor 5 the gas turbine 2 has a filter 9 for the air coming from the environment to be supplied to the compressor 5; the filter 9 usually has a higher elevation than the inlet of the compressor 5, e.g. the filter can have an elevation about 8 meter higher than the inlet of the compressor 5. In addition, the compressor 5 is typically provided with variable inlet guide vanes 10 to control the amount of air that is supplied to the compressor 5.

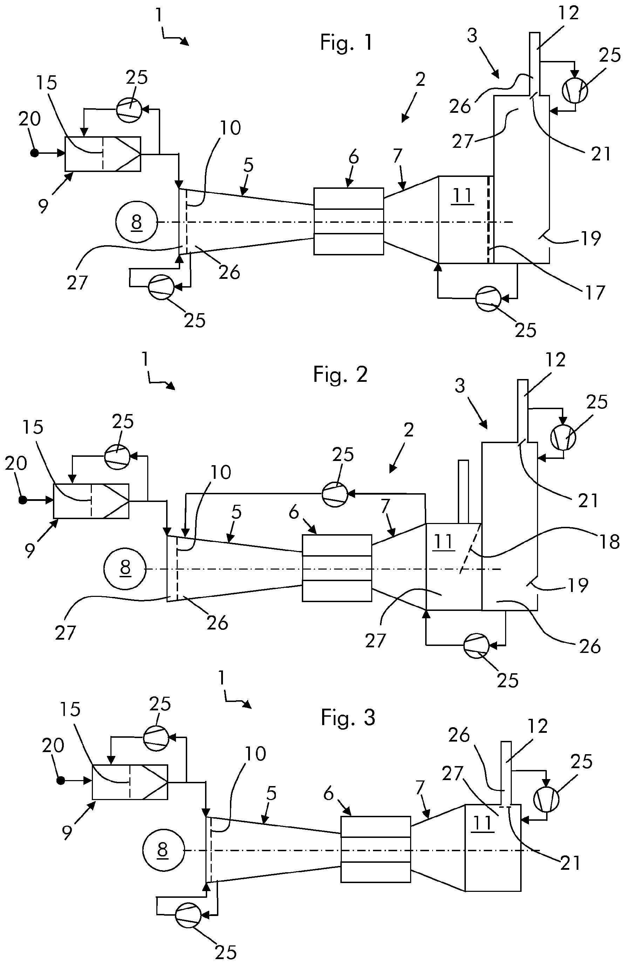

Downstream of the turbine 7 typically a discharge duct 11 is provided. The discharge duct 11 can be connected to a stack like for example the embodiments shown in figures 2 and 3 or the discharge duct 11 can be connected to the heat recovery steam generator 3, like for example the embodiment shown in figure 1. In the heat recovery steam generator 3 steam is generated by cooling the exhaust gas from the discharge duct 11. Downstream of the heat recovery steam generator 3 (with reference to exhaust gas flow during normal operation) the stack 12 is provided; usually the stack 12 is provided at the top of the heat recovery steam generator 3.

The arrangement 1 comprises one or more than one draft interceptors.

The draft interceptors are components that are provided in the arrangement in order to counteract the draft of cold air when the gas turbine is not operating, i.e. it is stopped.

The draft interceptors can be components specifically provided for counteracting the draft or they can be components with another main function but that are also used as draft interceptors; for example the variable inlet guide vanes are mainly provided for the regulation of the air mass flow through the gas turbine, but they can also be used as draft interceptors, because when the gas turbine is stopped they can be set to a closed configuration or to a configuration with a minimum opening.

The draft interceptors are generally associated to the arrangement 1, i.e. they can be provided at the gas turbine 2 and/or at the heat recovery steam generator 3 (when this is provided).

The draft interceptors can include one or more among:
- a shutter 15 at the filter 9 (e.g. the shutter can be located in the filter house); this solution has the advantage that the suction speed in low and thus the risk of sucking shutter parts in the gas turbine is low;
- the variable inlet guide vanes 10; in this case the variable inlet guide vanes 10 can be set to closed position;
- a shutter 17 between the gas turbine 2 and the heat recovery steam generator 3; this solution allows to counteract the draft through the gas turbine caused by the natural convection in the heat recovery steam generator;
- a flap 18 between the gas turbine 2 and the heat recovery steam generator 3, to divert the exhaust gas between an auxiliary stack 12a (to allow operation in single mode) and the heat recovery steam generator 3 (to allow operation in combined cycle). When the gas turbine 2 is stopped, the flap 18 can be used to either stop the draft in the heat recovery steam generator 3 or to close the auxiliary stack 12a;
- a flap 19 at the heat recovery steam generator 3 (e.g. at a position at the lower part of the heat recovery steam generator 3 (preferably this flap 19 has the same altitude as the air intake 20;
- a damper 21 at the stack 12.

These draft interceptors counteract the cooling of the gas turbine 2 and possibly of the heat recovery steam generator 3, but because of e.g. leakages or their configuration, they cannot completely prevent it.

The arrangement 1 further comprises a sucker 25 connected to the arrangement 1, for sucking gas from the arrangement 1, for equalizing the pressure through at least the gas turbine 2 when the gas 2 turbine is stopped. In case the arrangement 1 also has a heat recovery steam generator 3, the pressure through the heat recovery steam generator 3 can be equalized with the pressure within the gas turbine 2 as well (but this is not mandatory).

The sucker 25 is connected to a first zone 26 adjacent a draft interceptor 15, 10, 17, 18, 19, 21. The zone 26 is within the arrangement 1, such that gas is sucked from the inside of the arrangement 1.

In different embodiments, the sucker 25 can discharge outside of the arrangement 1 the gas sucked from the first zone 26; alternatively, the sucker 25 can discharge the gas sucked from the first zone 26 to a second zone 27 also within the arrangement 1. In this case the sucker 25 is connected between the first zone 26, with and a second zone 27, with the first zone 26 facing a first side of the draft interceptor 15, 10, 17, 18, 19, 21, and the second zone 27 facing a second side of the draft interceptor 15, 10, 17, 18, 19, 21.

The sucker 25 is preferably a fan or a blower or a compressor and more preferably it is a reversible sucker (i.e. a reversible fan or blower or compressor, i.e. a fan or blower or compressor able to exchange inlet with the outlet or provided with or connected to piping and possibly valves that allow to suck gas from the second zone 27 and feed gas to the first zone 26.

Preferably the first zone 26 is located downstream of the draft interceptor 15, 10, 17, 18, 19, 21, with reference to a flow through the gas turbine during operation.

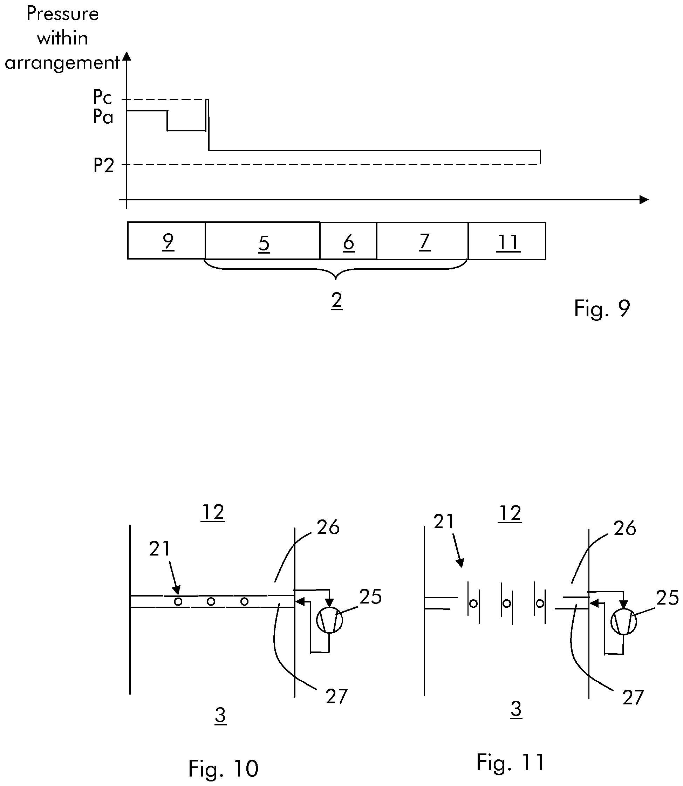

When the sucker 25 is provided at the draft interceptor 21 at the stack (figures 10, 11), in order to reduce the leakages, the draft interceptor 21 such as damper can be made with a hollow structure and the sucker 25 can be used to increase the pressure within the hollow structure of the draft interceptor 21. This allows to reduce the leakages of gas from the heat recovery steam generator 3.

The operation of the arrangement is apparent from that described and illustrated and is substantially the following.

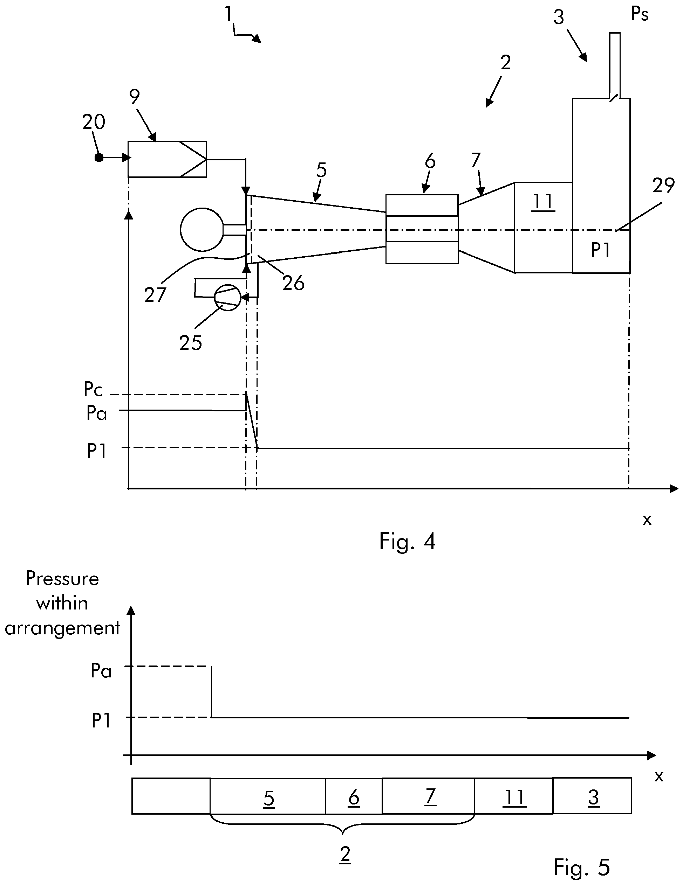

In the following reference to figure 4 is made, that shows the pressure within the arrangement in one embodiment (namely the pressure shown is the pressure through the filter 9 and over the axis 29 through the gas turbine 2 and heat recovery steam generator 3). In this case the draft interceptor is defined by the variable inlet guide vane 10 and the sucker 25 is connected between a first zone 26 and a second zone 27 adjacent the variable inlet guide vane 10.

The pressure at the air intake 20 and filter 9 is the ambient pressure Pa. The pressure Pc at the inlet of the compressor 5 is higher than the pressure at the inlet 20 of the filter, because of the higher altitude of the filter 9 than the inlet of the compressor 5.

The pressure at the heat recovery steam generator 3 (at the lower part thereof, i.e. at the part of the heat recovery steam generator 3 facing the gas turbine 2) is P1, with

### P1<Pa

because of the wind and/or heat condition of the gas turbine and/or heat condition of the heat recovery steam generator and because of the height of the heat recovery steam generator. The pressure at the top of the stack 12 is Ps, with

### Ps<P1.

In addition, since typically the stack has a much higher elevation than the air intake 20, typically it is also

### Pa>Ps.

When the gas turbine 2 and the heat recovery steam generator 3 are stopped the variable inlet guide vanes 10 are closed; at the same time the sucker 25 (e.g. a fan) sucks gas from downstream the variable inlet guide vanes 10 and pumps this gas upstream of the variable inlet guide vanes 10; this causes a pressure difference through the variable inlet guide vanes 10 such that the pressure downstream of the variable inlet guide vanes 10 (i.e. at the first zone 26) is substantially the same as the pressure P1. Since the pressure through the gas turbine 2 and heat recovery steam generator 3 is equalized or substantially equalized, there is no draft or a limited draft through the gas turbine 2 and heat recovery steam generator 3.

In the following some examples of the pressure course through the gas turbine and possibly heat recovery steam generator are described with reference to figures 5 through 9; in these figures Pa indicates the ambient pressure at the inlet of the filter 9, Pc the pressure at the inlet of the compressor 5, Ps the pressure at the outlet of the stack, P1 the pressure at the lower part of the heat recovery steam generator 3, P2 the pressure at the discharge duct 11; the pressure is measured within the filter 9 or, for the gas turbine 2 and heat recovery steam generator 3, over the axis 29.

Figure 5 schematically shows the internal pressure within the arrangement in an embodiment with sucker 25 connected at the variable inlet guide vanes 10 (i.e. like in figure 4; the pressure through the filter 9 is not shown). From this figure it is apparent that the pressure through the gas turbine 2 and the heat recovery steam generator 3 is uniform (i.e. the pressure is equalized) such that no draft through the gas turbine 2 and heat recovery steam generator 3 occurs.

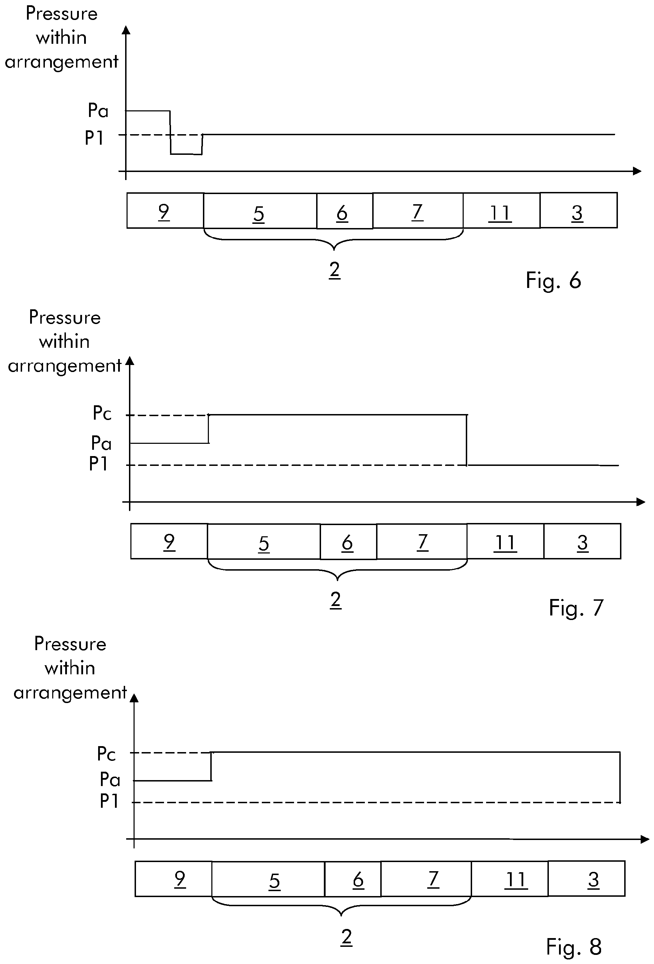

Figure 6 schematically shows the internal pressure within the arrangement 1 in an embodiment with sucker 25 connected to the filter 9. Also in this case the pressure through the gas turbine 2 and the heat recovery steam generator 3 is uniform and no draft through the gas turbine 2 and heat recovery steam generator 3 occurs.

Figure 7 schematically shows the internal pressure within the arrangement in an embodiment with sucker 25 connected downstream of the gas turbine (e.g. the sucker 25 can be connected in correspondence of the shutter 17). Also in this case the pressure through the gas turbine 2 is uniform (but it is different from the pressure at the heat recovery steam generator 3. Therefore no draft through the gas turbine 2 occurs.

Figure 8 schematically shows the internal pressure within the arrangement in an embodiment with sucker 25 connected at the stack 12. Also in this case the pressure through the gas turbine 2 and the heat recovery steam generator 3 is uniform and no draft through the gas turbine 2 and heat recovery steam generator 3 occurs.

Figure 9 schematically shows the internal pressure within the arrangement in an embodiment with gas turbine 2 and suckers 25 connected at the filter 9, at the variable inlet guide vanes 10 and at the stack 12, but without the heat recovery steam generator 3 (this arrangement is for example shown in figure 3). Also in this case the pressure through the gas turbine 2 is uniform, even if this is made in different steps; thus also in this case no draft through the gas turbine 2 occurs (naturally pressure steps are also possible in case the heat recovery steam generator 3 is provided downstream of the gas turbine 2).

The present invention also refers to a method for counteracting draft through an arrangement including a gas turbine during a stop.

The method comprises stopping the gas turbine and then equalizing the pressure at least through the gas turbine 2.

Equalizing the pressure comprises sucking gas; preferably the gas is sucked from a first zone 26 adjacent the at least one draft interceptor 15, 10, 17, 18, 19, 21. At least a part of the sucked gas can be fed to a second zone 27 facing a second side of the draft interceptor 15, 10, 17, 18, 19, 21.

Advantageously the method can comprise alternate feeding or sucking gas from a same first and/or second zone 26, 27 according to the environmental conditions. In fact according to the environmental conditions the pressure outside the arrangement 1 can be higher or lower than the pressure inside, therefore the possibility to alternatively suck gas from or feed gas into the same first and/or second zone 26, 27 allows to adapt the operation to the external environmental conditions.

Preferably, sucking gas occurs from a first zone 26 located downstream of the at least one draft interceptor with reference to a flow through the gas turbine during operation.

In different embodiments the draft interceptors can be upstream of the compressor 5 and/or downstream of the turbine 7 and/or at the heat recovery steam generator 3 and/or downstream of the heat recovery steam generator 3.

Advantageously, according to the arrangement and method, even if there are fuel leakages within the combustion chamber 6 during the gas turbine stop, these fuel leakages cannot reach the heat recovery steam generator, because there is no draft within the gas turbine 2.

Naturally the features described may be independently provided from one another.

### REFERENCE NUMBERS

1 arrangement
2 gas turbine
3 heat recovery steam generator
5 compressor
7 combustion chamber
7 turbine
8 electric generator
9 filter
10 variable inlet guide vanes
11 discharge duct
12 stack
12a auxiliary stack
15 draft interceptor/shutter
18 draft interceptor/flap
19 draft interceptor/flap
20 air intake
21 draft interceptor/damper
25 sucker
26 first zone
27 second zone
Pa ambient pressure at the inlet of the filter 9
Pc pressure at the inlet of the compressor 5
Ps pressure at the outlet of the stack
P1 pressure at the lower part of the heat recovery steam generator 3
P2 pressure at the discharge duct 11

## Claims

1. A method for counteracting draft through an arrangement (1) including a gas turbine (2) during a stop, the method comprising stopping the gas turbine (2) and then equalizing the pressure at least through the gas turbine (2); wherein equalizing the pressure comprises sucking gas; wherein the gas turbine (2) comprises a compressor (5), a combustion chamber (6), a turbine (7), and the arrangement comprises at least one draft interceptor (15, 10, 17, 18, 19, 21); wherein the gas is sucked from a first zone (26) adjacent the at least one draft interceptor (15, 10, 17, 18, 19, 21); wherein the first zone (26) faces a first side of the draft interceptor (15, 10, 17, 18, 19, 21), the method comprising feeding at least a part of the sucked gas to a second zone (27) facing a second side of the draft interceptor (15, 10, 17, 18, 19, 21);
the method being **characterized by** alternatively feeding or sucking gas from a same first and/or second zone (26, 27) according to the environmental conditions.

2. The method of claim 1, **characterized by** sucking gas from a first zone (26) located downstream of the at least one draft interceptor (15, 10, 17, 18, 19, 21) with reference to a flow through the gas turbine (2) during operation.

3. The method of claim 1, **characterized in that** the arrangement (1) comprises a heat recovery steam generator (3) downstream of the gas turbine (2).

4. The method of claim 1, **characterized in that** the at least a draft interceptor (15, 10, 17, 18, 19, 21) is upstream of the compressor (5) and/or downstream of the turbine (7) and/or at the heat recovery steam generator (3) and/or downstream of the heat recovery steam generator (3).

5. An arrangement (1) including a gas turbine (2), further comprising a sucker (25) connected to the arrangement (1) and for sucking gas from the arrangement (1), for equalizing the pressure through at least the gas turbine (2) when the gas turbine is stopped; the gas turbine (2) comprising a compressor (5), a combustion chamber (6), a turbine (7), and the arrangement (1) comprising at least one draft interceptor (15, 10, 17, 18, 19, 21); wherein the sucker (25) is connected to a first zone (26) adjacent the at least one draft interceptor (15, 10, 17, 18, 19, 21); wherein the sucker (25) is connected between the first zone (26) and a second zone (27), the first zone (26) facing a first side of the draft interceptor (15, 10, 17, 18, 19, 21), the second zone (27) facing a second side of the draft interceptor (15, 10, 17, 18, 19, 21);
the arrangement being **characterized in that** the sucker (25) is configured to alternatively feeding or sucking gas from a same first and/or second zone (26, 27) according to the environmental conditions.

6. The arrangement (1) of claim 5, **characterized in that** the sucker (25) is a fan or a blower or a compressor.

7. The arrangement (1) of claim 5, **characterized in that** the sucker (25) is a reversible sucker.

8. The arrangement (1) of claim 5, **characterized in that** the first zone (26) is located downstream of the at least one draft interceptor (15, 10, 17, 18, 19, 21) with reference to a flow through the gas turbine (2) during operation.

9. The arrangement (1) of claim 5, **characterized by** further comprising a heat recovery steam generator (3) downstream of the gas turbine (2).

## Patentansprüche

1. Verfahren zum Entgegenwirken von Zugluft durch eine Anordnung (1) mit einer Gasturbine (2) während einer Abschaltung, wobei das Verfahren das Abschalten der Gasturbine (2) und anschließend das Angleichen des Drucks mindestens durch die Gasturbine (2) umfasst; wobei das Angleichen des Drucks das Ansaugen von Gas umfasst; wobei die Gasturbine (2) einen Verdichter (5), eine Brennkammer (6) und eine Turbine (7) umfasst und die Anordnung mindestens einen Zugluftabscheider (15, 10, 17, 18, 19, 21) umfasst; wobei das Gas aus einem ersten Bereich (26) abgesaugt wird, der neben dem mindestens einen Zugluftabscheider (15, 10, 17, 18, 19, 21) angeordnet ist;
wobei der erste Bereich (26) einer ersten Seite des Zugluftabscheiders (15, 10, 17, 18, 19, 21) gegenüberliegt, wobei das Verfahren das Zuführen mindestens eines Teils des abgesaugten Gases in einen zweiten Bereich (27) umfasst, der einer zweiten Seite des Zugluftabscheiders (15, 10, 17, 18, 19, 21) gegenüberliegt;
wobei das Verfahren **dadurch gekennzeichnet ist, dass** Gas je nach den Umgebungsbedingungen alternativ demselben ersten und/oder zweiten Bereich (26, 27) zugeführt wird oder aus diesem abgesaugt wird.

2. Verfahren nach Anspruch 1, **dadurch gekennzeichnet, dass** Gas aus einem ersten Bereich (26) abgesaugt wird, der sich in Bezug auf eine Strömung durch die Gasturbine (2) während des Betriebs abströmseitig des mindestens einen Zugluftabscheiders (15, 10, 17, 18, 19, 21) befindet.

3. Verfahren nach Anspruch 1, **dadurch gekennzeichnet, dass** die Anordnung (1) einen Abhitzedampferzeuger (3) umfasst, der abströmseitig der Gasturbine (2) angeordnet ist.

4. Verfahren nach Anspruch 1, **dadurch gekennzeichnet, dass** der mindestens eine Zugluftabscheider (15, 10, 17, 18, 19, 21) anströmseitig des Verdichters (5) und/oder abströmseitig der Turbine (7) angeordnet ist und/oder an dem Abhitzedampferzeuger (3) und/oder abströmseitig des Abhitzedampferzeugers (3).

5. Anordnung (1) mit einer Gasturbine (2), zudem umfassend einen Sauger (25), der mit der Anordnung (1) verbunden ist und Gas aus der Anordnung (1) saugt, um den Druck mindestens durch die Gasturbine (2) anzugleichen, wenn die Gasturbine (2) abgeschaltet wird; wobei die Gasturbine (2) einen Verdichter (5), eine Brennkammer (6) und eine Turbine (7) umfasst und die Anordnung mindestens einen Zugluftabscheider (15, 10, 17, 18, 19, 21) umfasst; wobei der Sauger (25) mit einem ersten Bereich (26) verbunden ist, der neben dem mindestens einen Zugluftabscheider (15, 10, 17, 18, 19, 21) angeordnet ist; wobei der Sauger (25) zwischen dem ersten Bereich (26) und einem zweiten Bereich (27) verbunden ist und der erste Bereich (26) einer ersten Seite des Zugluftabscheiders (15, 10, 17, 18, 19, 21) gegenüberliegt und der zweite Bereich (27) einer zweiten Seite des Zugluftabscheiders (15, 10, 17, 18, 19, 21) gegenüberliegt;
wobei die Anordnung (1) **dadurch gekennzeichnet ist, dass** der Sauger (25) dazu dient, je nach den Umgebungsbedingungen alternativ Gas demselben ersten und/oder zweiten Bereich (26, 27) zuzuführen oder aus diesem abzusaugen.

6. Anordnung (1) nach Anspruch 5, **dadurch gekennzeichnet, dass** der Sauger (25) ein Lüfter, ein Gebläse oder ein Verdichter ist.

7. Anordnung (1) nach Anspruch 5, **dadurch gekennzeichnet, dass** der Sauger (25) ein umkehrbarer Sauger ist.

8. Anordnung (1) nach Anspruch 5, **dadurch gekennzeichnet, dass** sich der erste Bereich (26) in Bezug auf eine Strömung durch die Gasturbine (2) während des Betriebs abströmseitig des mindestens einen Zugluftabscheiders (15, 10, 17, 18, 19, 21) befindet.

9. Anordnung (1) nach Anspruch 5, **dadurch gekennzeichnet, dass** die Anordnung (1) zudem einen Abhitzedampferzeuger (3) umfasst, der abströmseitig der Gasturbine (2) angeordnet ist.

## Revendications

1. Procédé pour contrebalancer un appel d'air à travers un agencement (1) comprenant une turbine à gaz (2) pendant un arrêt, le procédé comprenant l'arrêt de la turbine à gaz (2) et ensuite l'égalisation de la pression au moins à travers la turbine à gaz (2) ; où l'égalisation de la pression comprend l'aspiration du gaz ; où la turbine à gaz (2) comprend un compresseur (5), une chambre de combustion (6), une turbine (7), et l'agencement comprend au moins un intercepteur d'appel d'air (15, 10, 17, 18, 19, 21) ; où le gaz est aspiré d'une première zone (26) adjacente audit au moins un intercepteur d'appel d'air (15, 10, 17, 18, 19, 21) ; où la première zone (26) fait face à un premier côté de l'intercepteur d'appel d'air (15, 10, 17, 18, 19, 21), le procédé comprenant la fourniture d'au moins une partie du gaz aspiré à une deuxième zone (27) faisant face à un deuxième côté de l'intercepteur d'appel d'air (15, 10, 17, 18, 19, 21) ;
le procédé étant **caractérisé par** la fourniture ou l'aspiration alternativement de gaz à ou d'une même première et/ou deuxième zone (26, 27) en fonction des conditions environnementales.

2. Procédé selon la revendication 1, **caractérisé par** l'aspiration du gaz d'une première zone (26) située en aval dudit au moins un intercepteur d'appel d'air (15, 10, 17, 18, 19, 21) par rapport à un écoulement à travers la turbine à gaz (2) pendant le fonctionnement.

3. Procédé selon la revendication 1, **caractérisé en ce que** l'agencement (1) comprend un générateur de vapeur à récupération de chaleur (3) en aval de la turbine à gaz (2).

4. Procédé selon la revendication 1, **caractérisé en ce que** ledit au moins un intercepteur d'appel d'air (15, 10, 17, 18, 19, 21) est en amont du compresseur (5) et/ou en aval de la turbine (7) et/ou au niveau du générateur de vapeur à récupération de chaleur (3) et/ou en aval du générateur de vapeur à récupération de chaleur (3).

5. Agencement (1) comprenant une turbine à gaz (2), comprenant en outre un dispositif d'aspiration (25) relié à l'agencement (1) pour aspirer le gaz de l'agencement (1), pour égaliser la pression à travers au moins la turbine à gaz (2) lorsque la turbine à gaz est arrêtée ; la turbine à gaz (2) comprenant un compresseur (5), une chambre de combustion (6), une turbine (7), et l'agencement (1) comprenant au moins un intercepteur d'appel d'air (15, 10, 17, 18, 19, 21) ; dans lequel le dispositif d'aspiration (25) est relié à une première zone (26) adjacente audit au moins un intercepteur d'appel d'air (15, 10, 17, 18, 19, 21) ; dans lequel le dispositif d'aspiration (25) est relié entre la première zone (26) et une deuxième zone (27), la première zone (26) faisant face à un premier côté de l'intercepteur d'appel d'air (15, 10, 17, 18, 19, 21), la deuxième zone (27) faisant face à un deuxième côté de l'intercepteur d'appel d'air (15, 10, 17, 18, 19, 21) ;
l'agencement étant **caractérisé en ce que** le dispositif d'aspiration (25) est configuré pour fournir ou aspirer alternativement le gaz à ou d'une même première et/ou deuxième zone (26, 27) en fonction des conditions environnementales.

6. Agencement (1) selon la revendication 5, **caractérisé en ce que** le dispositif d'aspiration (25) est un ventilateur ou une soufflante ou un compresseur.

7. Agencement (1) selon la revendication 5, **caractérisé en ce que** le dispositif d'aspiration (25) est un dispositif d'aspiration réversible.

8. Agencement (1) selon la revendication 5, **caractérisé en ce que** la première zone (26) est située en aval dudit au moins un intercepteur d'appel d'air (15, 10, 17, 18, 19, 21) par rapport à un écoulement à travers la turbine à gaz (2) pendant le fonctionnement.

9. Agencement (1) selon la revendication 5, **caractérisé en ce qu'**il comprend en outre un générateur de vapeur à récupération de chaleur (3) en aval de la turbine à gaz (2).
